# EUROPEAN PATENT APPLICATION

(11) **EP 2 679 642 A1**
(43) Date of publication of application: **01.01.2014**
(21) Application number: 12748848.4
(22) Date of filing: 22.02.2012
(51) Int. Cl.: C09D 129/04, B32B 9/00, B32B 27/30, C08F 8/14, C08K 5/09, C08L 29/04, C09D 5/02, C09D 7/12

(54) **WATER-BASED COATING FLUID AND MULTILAYERED STRUCTURE OBTAINED USING SAME**

(30) Priority: 25.02.2011 JP 2011039301
(71) Applicant: The Nippon Synthetic Chemical Industry Co., Ltd., Osaka-shi, Osaka 530-0018 (JP)
(72) Inventor: ONO Hiroyuki, Osaka-shi Osaka 530-0018 (JP)
(74) Representative: HOFFMANN EITLE
(86) International application number: PCT/JP2012/054210
(87) International publication number: WO 2012/115128

(57) **Abstract**

Provided is aqueous coating composition which can give a gas-barrier layer having an improved water resistance while suppressing decrease of gas-barrier property inherent in a PVA-based resin. Also provided is a multilayer structure obtained using the aqueous coating composition. The aqueous coating composition comprises (A) acetoacetyl group-containing polyvinyl alcohol-based resin having an acetoacetyl group content of 0.5 to 3 mol%, and (B) alkaline earth metal salt of glyoxylic acid as a crosslinking agent.

## Description

### TECHNICAL FIELD

The present invention relates to an aqueous coating composition comprising polyvinyl alcohol-based resin, in particular, an aqueous coating composition capable of providing a gas-barrier layer having excellent water resistance, and also relates to a multilayer structure having a gas-barrier layer obtained from the aqueous coating composition, and a manufacturing method thereof.

### BACKGROUND ART

Polyvinyl alcohol-based resin (hereinafter, abbreviated to "PVA-based resin") is transparent and has excellent gas-barrier property, and therefore is widely used for a packaging material for food, medicine, cosmetics or the like goods to be deteriorated by oxygen.
However, PVA-based resin is easy to absorb moisture and greatly lowered in gas-barrier property due to moisture absorption. For this reason, the PVA-based resin is used as a multilayer structure where one or both surfaces of the layer containing PVA-based resin is protected by laminating a thermoplastic resin layer excellent in water vapor barrier property.
Since the PVA-based resin is not applicable to melt molding, the layer containing PVA-based resin is usually formed by applying an aqueous coating composition containing PVA-based resin on a substrate and drying.

Even if the surfaces of the PVA-based resin layer is covered with a thermoplastic resin layer to form a multilayer structure, it is difficult for the PVA-based resin layer to avoid influence of moisture when used under high humidity or used as a packaging material for products containing a great deal of moisture or products to be subjected to boiling or retorting treatment. Accordingly, it is important to enhance humidity resistance or water resistance of the PVA-based resin layer.

Crosslinking PVA-based resin with a crosslinking agent is known as a technique for imparting water resistance to PVA-based resin. The crosslinking of PVA-based resin is also considered to apply to a multilayer structure comprising a PVA-based resin layer.
For example, JP2007-262410A (patent document 1) suggests a resin composition for gas-barrier layer with enhanced resistance to boiling treatment and retorting treatment. The resin composition is a liquid composition having a pH adjusted to 5 or less, and containing a highly hydrogen bonded resin such as PVA-based resin, an inorganic layered compound, and a metal organic compound crosslinkable with the highly hydrogen bonded resin.

According to the technique disclosed in the patent document 1, the aqueous coating composition forming a gas-barrier layer is strong acid adjusted to pH 5 or less, in order to perform the crosslinking reaction. However, such strong acidic coating composition inflicts a large damage on the substrate to be applied, and requires acid resistance treatment for apparatuses used for the production of the multilayer structure, which are restrictive for the industrial usages.

JP2010-77385A (patent document 2) discloses that a PVA-based resin having highly reactive acetoacetyl group (i.e. AA-PVA-based resin) is imparted with superior water resistance by crosslink bond. Some AA-PVA-based resins having water resistance imparted by crosslinking with a crosslinking agent disclosed in the patent document 2 are practically used. A combination of AA-PVA-based resin and a salt of glyoxylic acid as a crosslinking agent is particularly known. The aqueous coating composition containing the combination initiates crosslinking reaction upon only heating and is proceeded rapidly to form a coating layer having superior water resistance, regardless of being stably present under normal temperature.

A diamine compound is known as other crosslinking agent for PVA-based resin, however, the diamine compound is generally caused of skin irritation, and has a short pot life. Under these situations, a harmless crosslinking agent having long pot life in place of the diamine compound is required from users and manufacturing sites.

[patent document 1] JP2007-262410A
[patent document 2] JP2010-77385A

### DISCLOSURE OF THE INVENTION

### TECHNICAL PROBLEM TO BE SOLVED BY THE INVENTION

It is supposed that the excellent gas-barrier property of PVA-based resin is based on highly crystalline structure of PVA-based resin formed with hydrogen bonds between their hydroxyl groups. Such highly crystalline structure is due to the simple structure of PVA-based resin.
Since AA-PVA-based resin contains high volume acetoacetyl groups in side chain thereof by modification, the gas-barrier property tends to be lowered, comparing with an unmodified PVA-based resin. If the PVA-based resin is crosslinked enough to satisfy the water resistance, gas-barrier property intrinsic in PVA-based resin would be impaired due to the crosslinked portion inhibiting the formation of crystalline, which is problematic.

Actually, a film was formed with use of the combination disclosed in Example 2 in the patent document 2, i.e. the combination of a salt of glyoxylic acid and the AA-PVA-based resin having an average polymerization degree of 1200, saponification degree of 99 mol%, and acetoacetyl group content of 5 mol%. The gas-barrier property of the film resulting from crosslinking was confirmed to be insufficient.

The present invention is completed under the above circumstances. The object of the invention is to provide an aqueous coating composition formable gas-barrier layer having enhanced water resistance while suppressing to lower gas-barrier property intrinsic in PVA-based resin. The object of the invention is also to provide a multilayer structure containing gas-barrier layer formed with the coating composition.

### MEANS FOR SOLVING THE PROBLEMS

The present inventor has intensely studied and found that, when a metal salt of glyoxylic acid was employed for a crosslinking agent, the gas-barrier property depended on the type of metal salt of glyoxylic acid and acetoacetyl group content (AA degree) of AA-PVA-based resin. The inventor has further studied about these findings and accomplished the present invention.

The aqueous coating composition of the invention comprises (A) acetoacetyl group-containing polyvinyl alcohol-based resin having an acetoacetyl group content of 0.5 to 3 mol%, and (B) alkaline earth metal salt of glyoxylic acid.

A preferable alkaline earth metal salt of glyoxylic acid (B) is calcium glyoxylate. In a preferable embodiment of the aqueous coating composition, the content of the alkaline earth metal salt of glyoxylic acid (B) is in the range of 0.1 to 20 parts by weight with respect to 100 parts by weight of the acetoacetyl group-containing polyvinyl alcohol-based resin (A).

The multilayer structure of the invention comprises a substrate and a gas barrier layer on at least one surface of the substrate. The gas barrier layer is a dry film of an aqueous coating composition containing (A) acetoacetyl group-containing polyvinyl alcohol-based resin having an acetoacetyl group content of 0.5 to 3 mol% and (B) alkaline earth metal salt of glyoxylic acid. The dry film contains a crosslinked substance of the (A) acetoacetyl group-containing polyvinyl alcohol-based resin crosslinked with the (B) alkaline earth metal salt of glyoxylic acid.

A method for producing a multilayer structure of the invention comprises steps of: applying an aqueous coating composition containing (A) acetoacetyl group-containing polyvinyl alcohol-based resin having an acetoacetyl group content of 0.5 to 3 mol% and (B) alkaline earth metal salt of glyoxylic acid onto a substrate; and drying a coating layer resulting from the applying step. In a preferable embodiment, the drying step includes heating process.

According to another aspect of the invention, a method of improving water resistance and gas-barrier property of a polyvinyl alcohol-based resin composition layer on at least one surface of a substrate is provided. The method comprises using an aqueous coating composition containing (A) acetoacetyl group-containing polyvinyl alcohol-based resin having an acetoacetyl group content of 0.5 to 3 mol% and (B) alkaline earth metal salt of glyoxylic acid as a raw material for the polyvinyl alcohol-based resin composition layer.

The acetoacetyl group content of the acetoacetyl group-containing PVA-based resin in the description is a value measured by ¹H-NMR.

### EFFECT OF THE INVENTION

The aqueous coating composition of the invention can provide a coating layer with water resistance and gas-barrier property, in particular, with holding excellent water resistance and suppressing decrease of gas-barrier property under high humidity.

### MODE FOR CARRYING OUT OF THE INVENTION

The following description about constituents shows an embodiment (typical embodiment) of the present invention, and therefore the scope of the present invention is not construed as being limited to the described embodiments. Hereinafter, the present invention will be described in more detail.

### [AA-PVA-based resin]

At first, AA-PVA-based resin used in the present invention is explained. The AA-PVA-based resin used in the invention is a PVA-based resin having an acetoacetyl group in its side chain, and the content of the acetoacetyl group is in the range from 0.5 to 3 % by mole based on the total mole of the AA-PVA-based resin.

The method of manufacturing the AA-PVA-based resin is not particularly limited to, but includes, for example, i) a method comprising reacting PVA-based resin with diketene; ii) a method comprising transesterifying by the reaction of PVA-based resin with acetoacetic acid ester; iii) a method comprising saponifying a copolymer of vinyl acetate and vinyl acetoacetate. Among them, the method i), which is a post-modified method, is preferably employed because the method i) comprises simple processes and may produce a qualified AA-PVA-based resin.

PVA-based resin as a starting material is typically a saponified polymer of vinyl ester-based monomers or derivatives thereof. The vinyl ester-based monomer includes vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzonate, vinyl versatate, and so on, and vinyl acetate is preferably used in view of economics.

A saponified copolymer of vinyl ester-based monomer and a comonomer copolymerizable with the vinyl ester-based monomer may also be used. The comonomer includes, for example, olefins such as ethylene, propylene, isobuthylene, α-octene, α-dodecene, α-octadecen; hydroxy group-containing α-olefins such as 3-buten-1-ol, 4-penten-1-ol, 5-hexen-1-ol, 3,4-dihydroxy-1-butene, and derivatives such as acylated compound thereof; unsaturated acids such as acrylic acid, methacrylic acid, crotonic acid, maleic acid, maleic anhydride, itaconic acid, undecylenic acid, and a salt thereof, and mono- or di-alkyl ester; nitriles such as acrylonitrile, methacrylonitrile; amides such as diacetone acrylamide, acrylamide, methacrylamide; olefin sulfonic acids such as ethylene sulfonic acid, allyl sulfonic acid, methallyl sulfonic acid, and a salt thereof; vinyl compound such as alkyl vinyl ether, dimethyl allyl vinyl ketone, N-vinylpyrrolidone, vinyl chloride, vinyl ethylene carbonate, 2,2-dialkyl-4-vinyl-1,3-dioxolane, glycerin monoallyl ether; substituted vinyl acetates such as isopropenyl acetate, 1-methoxyvinyl acetate; vinylidene chloride, 1,4-diacetoxy-2-butene, 1,4-dihydroxy-2-butene, vinylene carbonate, and so on.
The content of the comonomer introduced in the copolymer is usually from 10 mol% or less, particularly 5 mol% or less with respect to all structural units, depending on the kind of the comonomer. When the content is unduly large, water-solubility of the resultant copolymer is lowered, and reactivity with crosslinking agent may be inhibited, which are unpreferred.

Also, used may be a PVA-based resin having from about 1.0 to 3.5 mol% of 1,2-diol bond in PVA main chain, which is obtained by controlling a polymerization temperature when copolymerizing vinyl ester-based monomer and the comonomer.

Introduction of acetoacetyl group through the reaction with diketene may be performed by reacting PVA-based resin with gaseous or liquid diketene directly; by spraying gaseous or liquid diketene to the PVA-based resin adsorbed and/or occluded in an organic acid in the atmosphere of inert gas; or by spraying a mixture of organic acid and liquid diketene to PVA-based resin to react them; or the like.

A heatable apparatus equipped with stirrer, for example, kneader, Henschel mixer, ribbon blender, and various other blenders, as well as a stirring and drying apparatus may be used for performing the reaction.

The content of acetoacetyl group in the AA-PVA-based resin (hereinafter, abbreviated to "AA degree") is in the range of 0.5 to 3 mol%, preferably 1 to 3 mol%, more preferably 2 to 3 mol%. This is one of features of the invention because such range is lower than that of AA-PVA-based resins generally used for improving water resistance. Decrease of gas-barrier property of AA-PVA-based resin is supposed to cause from small crystalline thereof, and therefore, the higher AA degree is, the more considerably the gas-barrier property is lowered. Accordingly, smaller content of acetoacetyl group is preferable because the acetoacetyl group causes to inhibit crystal formation. However, at least 0.5 mol% of AA degree is needed for an essential object of giving water resistance.

The AA degree is represented by the content of acetoacetyl group (mol%) with respect to all vinyl structural units of AA-PVA-based resin. Specifically, the AA degree is calculated from the ratio of peak areas in the ¹H-NMR spectrum of methylene proton derived from main chain to methyl proton derived from AA group. Alternatively, the AA degree (mol%) is calculated based on the difference of the amount of acetic acid ester group in the PVA-based resin as starting material from the total amount of ester group (acetoacetic ester group + acetic acid ester group) in the AA-PVA-based resin. The amount of acetic acid ester group of the PVA-based resin as starting material can be obtained from the measurement of saponification degree as described below.

AA degree, corresponding to the content of acetoacetyl group of AA-PVA-based resin, may be controlled by the amount of diketene to be reacted in the case of producing AA-PVA-based resin by the reaction with diketene.

The average polymerization degree of the AA-PVA-based resin used in the invention is in the range of usually 300 to 5000, particularly 400 to 4000, more particularly 500 to 3000. When the average polymerization degree is unduly small, the PVA-based resin layer exhibits insufficient strength or difficult to obtain satisfactory water resistance. On the other hand, when the average polymerization degree is unduly large, the viscosity of the coating solution containing the PVA-based resin is so large that the workability tends to be decreased.
The average polymerization degree is measured based on JIS K6726. In the case of introduction of acetoacetyl group to the PVA-based resin as a starting material by post reaction, since the average polymerization degree of the PVA-based resin is usually remained before and after the introduction reaction, the average polymerization degree of the PVA-based resin used as the starting material may be employed.

The saponification degree of the AA-PVA-based resin used in the invention is high up to usually 60 mol% or more, particularly from 80 to 100 mol%, more particularly from 90 to 100 mol%, further more particularly from 98 to 100 mol%. Unduly low saponification degree may cause to lower the water resistance and gas-barrier property.
For the same reason as the average polymerization degree, the saponification degree of PVA-based resin used as a starting material may be employed for that of AA-PVA-based resin.

The AA-PVA-based resin may be contaminated by alkali metal acetate such as sodium acetate, organic acid such as acetic acid, organic solvent such as methanol and acetic acid methyl, which are residues or by-product in the manufacturing AA-PVA-based resin. The alkali metal acetate is a residue or by-product, mainly derived from the reaction product between alkali metal hydroxide used as saponification catalyst and acetic acid produced from the saponification of polyvinyl acetate. The organic acid is mainly derived from the organic acid occluding PVA-based resin to be reacted with diketene in order to introduce acetoacetic ester group to the PVA-based resin. The organic solvent is derived from a reaction solvent of PVA-based resin, and cleaning solvent used for manufacturing AA-PVA.

### [alkaline earth metal salt of glyoxylic acid]

Alkaline earth metal salt of glyoxylic acid is a salt of glyoxylic acid and alkaline earth metal such as beryllium, magnesium, calcium, strontium, and barium. The calcium salt is preferably used because of attaining a coating layer having excellent water resistance.

As for a crosslinking agent of AA-PVA-based resin, although the above-mentioned patent document 2 suggests the employment of a metal salt of glyoxylic acid, the alkaline earth metal salt is specifically employed according to the invention, which is one of features of the invention. The present inventor has studied diligently and found that there is a great difference in an influence on gas-barrier property between alkaline metal salt and alkaline earth metal salt when they are used as a crosslinking agent. In case that an alkaline metal salt of glyoxylic acid is used, the gas-barrier property is lowered, in particular, the gas-barrier property under high humidity is significantly lowered. In the case of use of alkaline earth metal salt of glyoxylic acid, gas-barrier property can be suppressed to be lowered even under high humidity. Although the mechanism cannot be explained, it may be presumed that alkaline earth metal salt could form a crosslinked structure capable of fixing a structure around AA group to result in a more stable crosslinked structure under high humidity, comparing to the use of alkaline metal salt. This is because a maximum of tetracoordinate crosslinked structure could be formed by chelation of the alkaline earth metal. Such fixation of the crosslinked structure would improve water resistance while suppressing to lower gas-barrier property due to motion of polymer molecular chain in an amorphous portion. Furthermore, gas permeation through the crosslinked portion could have been inhibited by the formed crosslinked structure.

Alkaline earth metal salt of glyoxylic acid can be produced by a known method including, for instance, (1) neutralization reaction of glyoxylic acid with alkaline earth metal compound, (2) salt exchange reaction of glyoxylic acid with an alkaline earth metal salt of an acid having an acid dissociation constant higher than the glyoxylic acid, or (3) hydrolysis in the presence of alkaline earth metal compound of glyoxylic acid ester, or the like. In the case that the water-solubility of the alkaline earth metal compound used for the neutralization reaction with glyoxylic acid is high, the method (1) is preferably employed. In the case that the water-solubility of the resultant glyoxylate is low and the alkaline earth metal salt of the acid has an acid dissociation constant higher than glyoxylic acid, the method (2) is preferably employed.

The method (1) is usually conducted using water medium, by reacting glyoxylic acid with alkaline earth metal compound (e.g. hydroxide or amine compound) in water, and drying alkaline earth metal salt of glyoxylic acid precipitate obtained by filtration.
The method (2) is usually conducted in water like the method (1), and alkaline earth metal salt of glyoxylic acid can be produced in the same manner as the method (1). The alkaline earth metal salt of the acid having a dissociation constant higher than glyoxylic acid is used in the method (2), and includes, for example, alkaline earth metal salt of aliphatic carboxylic acid such as calcium acetate and calcium propionate.

Alkaline earth metal salt of glyoxylic acid used in the invention may contain starting materials thereof, impurities derived from the starting materials, or by-product generated through the manufacturing process of the alkaline earth metal glyoxylate. For example, glyoxylic acid, hydroxide or amine compound of alkaline earth metal, aliphatic carboxylate, glyoxal, oxalic acid, oxalate, glycolic acid, or glycolic acid salt may be contaminated in the alkaline earth metal salt glyoxylate.

Alkaline earth metal salt of glyoxylic acid used in the invention include a compound where aldehyde group is acetalized or hemiacetalized with an alcohol having three or less carbon atoms such as methanol and ethanol, and diol having three or less carbon atoms such as ethylene glycol and propylene glycol. The acetal group and hemiacetal group release alcohol in water or under high temperature conditions to soon come to equilibrium with aldehyde group, and therefore, have a similar function as an aldehyde group.

The content of alkaline earth metal salt of glyoxylic acid in the aqueous coating composition of the invention is in the range of usually 0.1 to 20 %, particularly 1 to 15 %, further particularly 2 to 10 % by weight based on the weight of AA-PVA-based resin. When the content is unduly low, it is difficult to attain a sufficient water resistance or humidity resistance. When the content is unduly high, gas-barrier property may decrease considerably even under normal humidity.

### [aqueous coating composition]

Optionally, the aqueous coating composition of the invention may contain other ingredients besides the above-mentioned AA-PVA-based resin (A) and the alkaline earth metal salt of glyoxylic acid (B), according to the needs.

The content of AA-PVA-based resin (A) in the aqueous coating composition of the invention is in the range of usually 0.1 to 30 %, preferably 0.5 to 20 %, more preferably 1 to 15 % by weight based on the total weight of the water, the AA-PVA-based resin (A), and the alkaline earth metal salt of glyoxylic acid (B). When the content of AA-PVA-based resin (A) is unduly low, it is difficult to obtain a coating layer having a desired thickness, which may require repeating coating processes. When the content is unduly high, the viscosity of the coating composition is so high that may have trouble with coating operation and difficulty in obtaining uniform coating layer.

The content of alkaline earth metal salt of glyoxylic acid in the aqueous coating composition of the invention is in the range of usually 0.1 to 20 %, preferably 0.5 to 15 %, more preferably 1 to 10 % by weight based on the weight of AA-PVA-based resin. When the content is unduly low, water resistance and/or humidity resistance may be lowered to result in insufficient gas-barrier property under high humidity. On the contrary, when the content is unduly high, the gas-barrier property may become insufficient.

The aqueous coating composition of the invention may be prepared by a known preparation method of aqueous solution containing plural water-soluble compounds, for example, (1) a method of preparing an aqueous solution of AA-PVA-based resin (A) and aqueous solution or dispersed solution (i.e. slurry) of alkaline earth metal salt of glyoxylic acid (B) respectively, and mixing the solutions; (2) a method of adding and dissolving alkaline earth metal salt of glyoxylic acid (B) in aqueous solution of AA-PVA-based resin (A); (3) a method of adding and dissolving the mixture of AA-PVA-based resin (A) and alkaline earth metal salt of glyoxylic acid (B) in water. The method (1) is preferably employed because uniform and homogenous aqueous solution can be easily obtained.

The aqueous coating composition of the invention may contain an aqueous-soluble resin other than AA-PVA-based resin (A) in an amount of the range of 30 % or less, preferably 10 % or less, more preferably 5 % or less by weight based on the weight of the resin composition, where the effect of the invention is not inhibited. Examples of the water-soluble resin include unmodified PVA, a variety of modified PVA-based resins, polyvinylpyrrolidone, and alkaline metal salt of polyacrylic acid or polyacrylic acid. Moreover, a variety of aqueous emulsion may be blended with the aqueous coating composition.

Specifically, a PVA-based resin other than AA-PVA-based resin may be preferably chosen because of less suffering from phase separation in the coating composition and resulting coating layer. In particular, some modified PVA-based resin other than AA-PVA-based resin is preferably chosen for the purpose of giving another function.

The modified PVA-based resin other than AA-PVA-based resin is a saponified copolymer of vinyl ester-based monomer and various monomers. The monomer other than vinyl ester-based monomer includes olefins such as ethylene, propylene, isobuthylene, α**-**octene, α-dodecene, α-octadecen; hydroxy group-containing α-olefins such as 3-buten-1-ol, 4-penten-1-ol, 5-hexen-1-ol, 3,4-dihydroxy-1-butene, and derivatives such as acylated compound thereof; unsaturated acids such as acrylic acid, methacrylic acid, crotonic acid, maleic acid, maleic anhydride, itaconic acid, undecylenic acid, and a salt thereof, mono- or di-alkyl ester; nitriles such as acrylonitrile, methacrylonitrile; amides such as diacetone acrylamide, acrylamide, methacrylamide; olefin sulfonic acids such as ethylene sulfonic acid, allyl sulfonic acid, methallyl sulfonic acid, and a salt thereof; vinyl compound such as alkyl vinyl ethers, dimethyl allyl vinyl ketone, N-vinylpyrrolidone, vinyl chloride, vinyl ethylene carbonate, 2,2-dialkyl-4-vinyl-1,3-dioxolane, glycerin monoallyl ether; substituted vinyl acetates such as isopropenyl acetate, 1-methoxyvinyl acetate; vinylidene chloride, 1,4-diacetoxy-2-butene, 1,4-dihydroxy-2-butene, vinylene carbonate, and so on.

In addition to alkaline earth metal salt of glyoxylic acid (B), the aqueous coating composition of the invention may further contain a known crosslinking agent other than the glyoxylates (B) for the AA-PVA-based resin within the range, i.e. less than 50 %, preferably less than 25 %, by weight based on the total weight of the crosslinking agent, where the effect of the invention is not inhibited. Examples of the crosslinking agent include alkaline metal salt of glyoxylic acid; multivalent metal compound such as water-soluble titanium compound and water-soluble zirconium; amine compound such as ethylenediamine and meta-xylenediamine; hydrazine compound such as dihydrazide adipate; methylol group-containing compound such as methylolated melamine; aldehyde group-containing compound such as glyoxal, and so on.

Moreover, the aqueous coating composition of the invention may contain, as far as the effect of the invention is not inhibited, a conventional additive such as antifoamer, surfactant, ultraviolet absorber, antioxidant, colorant, fluorescent dye, preserving agent, antimold agent, or layered inorganic compound or cellulose nanofiber used for improving the gas-barrier property. Furthermore, the aqueous coating composition of the invention may contain organic solvent as a solvent other than water, for the purpose of improving wettability to substrate or controlling drying rate. Specific examples of the organic solvent include alcohols or ketones having from 1 to 4 carbon atoms, which are miscible with water.

According to the embodiments, the aqueous coating composition having a solid content of usually 0.1 to 50 wt%, particularly 0.5 to 30 wt%, more particularly 1 to 20 wt% is preferably used.
Preferably, the aqueous coating composition has a viscosity of usually 1 to 10000 mPa·s, particularly 2 to 5000 mPa·s, more particularly 3 to 3000 mPa·s. The viscosity is measured at 20 °C using B-type viscometer.
When the concentration or viscosity of the aqueous coating composition is unduly high, bubbles are difficult to vanish rapidly from the coating solution, and workability of coating is lowered, resulting in difficulty in formation of uniform coating layer. On the other hand, when the concentration or viscosity is unduly low, long time is required for drying, and repeating coating processes are required for obtaining a coating layer having a desired thickness.
The aqueous coating composition thus obtained may be applied onto a variety of substrates and be dried to provide a coating layer or gas-barrier layer.

### [multilayer structure]

A multilayer structure of the present invention comprises a coating layer obtained by applying the aqueous coating composition of the invention onto at least one surface of a substrate.

A material or shape of the substrate is not limited. The material of the substrate includes synthetic resins such as thermoplastic resin and thermosetting resin; glass; metal such as aluminium; natural material such as paper and wood. The shape includes film, sheet, non-woven fabric, and various molded products. A substrate having a shape of film or sheet is preferably used.

The thermoplastic resin as a material of the substrate includes polyolefin-based resin such as low density polyethylene, very low density polyethylene, high density polyethylene, polypropylene, ethylene-propylene copolymer, ethylene-butene copolymer, ethylene-vinyl acetate copolymer, ethylene-methyl methacrylate copolymer, ionomer resin; aromatic polyester-based resin such as polyethylene terephthalate, polybutylene terephthalate, polyethylene naphthalate; aliphatic polyester-based resin such as polylactic acid, polybutylene succinate, polybutylene succinate adipate; polyamide-based resin such as nylon-6, nylon 6,6, meta-xylenediamine-adipic acid polycondensate; acryl-based resin such as polymethacrylate, polymethyl methacrylate; styrene-based resin such as polystyrene, styrene-acrylonitrile; cellulose-based resin such as cellulose triacetate, cellulose diacetate; halogen-containing resin such as polyvinyl chloride, polyvinylidene chloride, polyvinylidene fluoride; engineering plastic such as polycarbonate resin, polysulphone resin, polyether sulphone resin, polyether ether ketone resin, polyphenylene oxide resin, liquid crystal polymer, and so on.

Among these thermoplastic resins, polypropylene, polyethylene terephthalate, or nylon is preferably used. In particular, it is preferable to employ a film made from such thermoplastic resin, furthermore uniaxial or biaxial stretched film, and moreover a film deposited with silica or alumina on the surface of the substrate. Some substrates may be treated by primer treatment, and anchor treatment; and a surface treatment such as plasma treatment, corona treatment, electron beam treatment, in order to enhance adhesiveness to the coating layer of the aqueous coating composition. For example, polyethylenimine or polyurethane-based emulsion may be used for the material of the primer treatment and the anchor treatment.
In the case that the substrate is film-shaped, the substrate has a thickness selected from the range of about 10 to 1000µm.

The manner of applying the inventive aqueous coating composition onto the substrate includes a gravure technique such as direct gravure technique, reverse gravure technique; roll coating technique such as two-roll bead coating technique, bottom feed three-roll reverse coating technique; doctor knife coating technique, die coating technique, dip coating technique, bar coating technique, slit coating technique, and the like known coating technique.

After applying the aqueous coating composition on the substrate, moisture and other volatile matter is removed from the resulting coating layer by drying. The drying temperature is determined depending on the thickness of the coating layer and appropriately selected from the range of usually 10 to 200 °C, particularly 20 to 150 °C, more particularly 30 to 120 °C. The drying time is determined depending on the above-mentioned drying temperature, and appropriately selected from the range of usually 0.1 to 120 minutes, particularly 0.5 to 60 minutes so that the content of the volatile matter is reduced to the predetermined amount or smaller.
The AA-PVA-based resin (A) of the invention is crosslinked with the alkaline earth metal salt of glyoxylic acid (B), during the above-mentioned heating and drying. Accordingly, the coating layer in the multilayer structure of the invention contains an AA-PVA-based resin (A) crosslinked with the alkaline earth metal salt of glyoxylic acid (B).

The thickness of the coating layer is adjusted to the range of usually 0.05 to 50 µm, preferably 0.1 to 30 µm, more preferably 1 to 20 µm. When the film thickness is unduly thin, sufficient gas-barrier property may not be ensured. On the contrary, when the film thickness is unduly thick, a multilayer structure comprising the coating layer tends to be impaired in flexibility.

A multilayer structure may further comprise another layer, in particular thermoplastic resin layer, on the substrate or the coating layer.

The layer construction of the multilayer structure of the invention is not only double layers of a/b but also other arbitrary combinations such as b/a/b, a/b/a, a1/a2/b, a/b1/b2, b2/b1/a/b1/b2, b1/b2/a/b3/b4, a1/b1/a2/b2 and the like, wherein "a (a1, a2, ...)" represents the PVA-based resin layer and "b (b1, b2, ...)" represents the thermoplastic resin layer. A preferable layer construction is b/a/b or b2/b1/a/b1/b2.

An adhesive layer may be interposed between the PVA-based resin layer (a) and the thermoplastic resin layer (b). Moreover, a deposit layer made of metal or an inorganic component is disposed on the surface of the multilayer structure or interposed between layers of the multilayer structure.

The thickness of the multilayer structure is in the range of usually 0.1 to 100 µm, particularly 1 to 50 µm, more particularly 2 to 30 µm. When the thickness is unduly thin, sufficient gas-barrier property is difficult to be ensured. On the contrary, when the thickness is unduly thick, flexibility of the multilayer structure tends to be impaired.
The thickness ratio (a/b) of PVA-based resin layer (a) to thermoplastic resin layer (b) of the multilayer structure is preferably determined from the range of 1/99 to 50/50, particularly 3/97 to 35/65, more particularly 4/96 to 25/75. In the case that the multilayer structure comprises plural PVA-based resin layers or plural thermoplastic resin layers, the ratio of the most thick PVA-based resin layer to the most thick thermoplastic resin layer is employed.

### [Example]

Hereinafter the present invention is described based on examples, but the invention is not restricted by the examples unless exceeding the gist of the invention.
Incidentally, "parts" and "%" in the examples are on the weight basis, unless otherwise indicated.

### [preparation of AA-PVA-based resin]

### (1) AA-PVA-based resin (1)

444 parts of unmodified PVA having average polymerization degree of 1100 and saponification degree of 99.1 mol% in a ribbon blender equipped with temperature adjuster were expanded by addition of 100 parts of acetic acid, and heated up to 60 °C with stirring at rotational frequency of 200 rpm. Next, 30 parts of diketene was added dropwise over a period of 0.5 hours, and reacted with the unmodified PVA for another 1 hour after the dropwise addition. After completing the reaction, the resultant was washed with methanol, dried at 70 °C for 6 hours, to obtain AA-PVA resin (1). Thus obtained AA-PVA-based resin (1) had AA degree of 2.3 mol% measured by the above-mentioned ¹H-NMR technique. The saponification degree of and polymerization degree of the AA-PVA-based resin (1) were 99.1 mol% and 1100 respectively based on those of the unmodified PVA used as the starting material for the AA-PVA-based resin (1). AA degree was measured by the above-mentioned ¹H-NMR technique, and hereinafter the same measuring method is employed for AA degree.

### (2) AA-PVA-based resin (2)

AA-PVA resin (2) was prepared in the same manner as the AA-PVA resin (1) except that 62 parts of diketene was added dropwise over a period of 2 hours and reacted with unmodified PVA for another 1 hour after the dropwise reaction. The obtained AA-PVA-based resin (2) had AA degree of 5.2 mol%.

### [preparation of metal salt of glyoxylic acid]

### (1) calcium glyoxylate (GOA-Ca)

To glyoxylic acid aqueous solution (25 %) in an amount of 202 g (i.e., 0.68 mol) in a 2-litter reactor having two openings, 268 g (i.e. 0.34 mol) of calcium acetate aqueous solution having a concentration of 20 % was added dropwise over a period of 2 hours. The resulting white crystal was filtrated, washed with water, and dried at 50 °C for 1 hour, to obtain calcium glyoxylate in an amount of 70.3 g, corresponding to 0.32 mol and 93.6 % yield.

### (2) sodium glyoxylate (GOA-Na)

To glyoxylic acid aqueous solution (50 %) in an amount of 456 g (3.10 mol) in a 2-litter reactor having two openings, 645 g (3.22 mol) of sodium hydroxide aqueous solution having a concentration of 20 % was added. The resulting white crystal was filtrated, washed with water, and dried at 50 °C for 1 hour, to obtain sodium glyoxylate in an amount of 210 g, corresponding to 1.84 mol and 59.5 % yield.

### [preparation of aqueous coating composition, and evaluation of coating layer]

Aqueous coating composition was prepared by mixing 100 parts by weight of 5 % aqueous solution of AA-PVA resin (1) or (2) with 0.25 parts by weight of metal salt of glyoxylic acid, and stirring. The mixing ratio of AA-PVA-based resin to metal salt of glyoxylic acid is 100:5 on the basis of the weight.
Thus prepared aqueous coating composition was applied, with use of a bar coater, on the PET film whose surface was treated with corona discharge treatment, and dried at 80 °C for 5 minutes in hot air oven, to provide a coating layer having a thickness of 3 µm on the PET film.

The gas-barrier property or oxygen permeability of the obtained coating layer of the multilayer film was measured under the conditions of 23 °C, 65 %RH and 23 °C, 80 %RH with "OXTRAN2/20" by MOCON, INC. The measurement results are shown in Table 1. The measurement value of the same kind of unmodified PVA resin as the starting material used for AA-PVA resin are also shown in Table 1 for reference.

The water resistance of the obtained coating layer of the multilayer structure was measured as a weight of elution in a hot water when it was dipped into the hot water of 80 °C for 1 hour. The condition for the measurement is a condition where an entire unmodified PVA was eluted in the hot water.

**[Table 1]**

| multilayer structure No. | aqueous coating composition | | | evaluation of coating layer | | |
|---|---|---|---|---|---|---|
| | PVA-based resin | | type of glyoxylate (GOA) | oxygen permeability (cc·3µm/m²·day·atm) | | 80 °C × 1 hr elution amount (wt%) |
| | saponification degree (mol%) | AA degree (mol%) | | 23°C×65%RH | 23°C×80%RH | |
| 1 | 99.1 | 2.3 | GOA-Ca | 0.2 | 70 | 5 or less |
| 2 | 99.1 | 2.3 | GOA-Na | 1.4 | over 200 | 5 or less |
| 3 | 99.1 | 5.2 | GOA-Ca | 1.2 | 90 | 5 or less |
| Reference Example | 99.1 | - | - | 0.5 | 90 | 100 |

All multilayer film Nos. 1 to 3, o, each of which a layer of AA-PVA-based resin was used, exhibited excellent water resistance.
Multilayer film No. 1, which comprises a coating layer of the aqueous coating composition containing calcium glyoxylate and the AA-PVA-based resin having a specific range of acetoacetyl group, exhibited excellent gas-barrier property under 65 %RH. The gas-barrier property of the multilayer film No.1 was not inferior to that of multilayer film comprising a coating layer of coating composition employing unmodified PVA resin instead of AA-PVA-based resin. On the other hand, multilayer film No.2 which comprises a coating layer of the coating solution containing sodium glyoxylate as a salt of glyoxylic acid, and multilayer film No.3 which comprises a coating layer of the aqueous coating composition employing the AA-PVA resin having AA degree of more than 5 mol%, were lowered in gas-barrier property under the condition of normal temperature and normal humidity (i.e. 23 °C, 65 %RH).

All gas-barrier properties of film of Nos.1 to 3, and a film employing unmodified PVA were lowered under the high humidity condition, comparing with those under the condition of normal temperature and normal humidity. Use of sodium glyoxylate as a crosslinking agent significantly decreased gas-barrier property, while use of calcium glyoxylate as a crosslinking agent could suppress the decrease of gas-barrier property. Additionally, film No.1 which comprises a coating layer of the coating composition employing AA-PVA having a lower AA degree, exhibited superior gas-barrier property even under high humidity.

### INDUSTRIAL APPLICABILITY

The aqueous coating composition of the invention can provide a coating layer having excellent water resistance and gas-barrier property. Accordingly, the coating layer is useful for a layer imparting gas-barrier on a variety of substrates, and useful for a gas-barrier layer of multilayer structure used as a packaging material for food, medicine, agrochemicals, cosmetics, electric components, in particular a packaging material being subjected to boiling or retorting treatment.

## Claims

1. An aqueous coating composition comprising (A) acetoacetyl group-containing polyvinyl alcohol-based resin having an acetoacetyl group content of 0.5 to 3 mol%, and (B) alkaline earth metal salt of glyoxylic acid.

2. The aqueous coating composition according to claim 1, wherein the (B) alkaline earth metal salt of glyoxylic acid is calcium glyoxylate.

3. The aqueous coating composition according to claim 1 or 2, wherein the (B) alkaline earth metal salt of glyoxylic acid contains 0.1 to 20 parts by weight with respect to 100 parts by weight of the (A) acetoacetyl group-containing polyvinyl alcohol-based resin.

4. A multilayer structure comprising a substrate and a gas-barrier layer on at least one surface of the substrate, wherein the gas-barrier layer is a dry film of an aqueous coating composition containing (A) acetoacetyl group-containing polyvinyl alcohol-based resin having an acetoacetyl group content of 0.5 to 3 mol%, and (B) alkaline earth metal salt of glyoxylic acid.

5. The multilayer structure according to claim 4, wherein the dry film contains a crosslinked substance of the acetoacetyl group-containing polyvinyl alcohol-based resin (A) crosslinked with the alkaline earth metal salt of glyoxylic acid (B).

6. A method for producing a multilayer structure comprising,
applying an aqueous coating composition containing (A) acetoacetyl group-containing polyvinyl alcohol-based resin having an acetoacetyl group content of 0.5 to 3 mol% and (B) alkaline earth metal salt of glyoxylic acid onto a substrate; and
drying a coating layer formed by the applying step.

7. The method for producing according to claim 6, wherein the drying step includes heating process.

8. A method of improving water resistance and gas-barrier property of a polyvinyl alcohol-based resin composition layer on at least one surface of a substrate comprising,
using an aqueous coating composition as a raw material of the polyvinyl alcohol-based resin composition layer, the aqueous coating composition containing (A) acetoacetyl group-containing polyvinyl alcohol-based resin having an acetoacetyl group content of 0.5 to 3 mol%, and (B) alkaline earth metal salt of glyoxylic acid.
